## Europäisches Patentamt
## European Patent Office
## Office européen des brevets

(19)

(11) Veröffentlichungsnummer: **0 003 848**
**A1**

(12) **EUROPÄISCHE PATENTANMELDUNG**

(21) Anmeldenummer: **79100558.0**

(22) Anmeldetag: **23.02.79**

(51) Int. Cl.²: **H 04 L 5/14**

(30) Priorität: **23.02.78 DE 2807785**

(43) Veröffentlichungstag der Anmeldung:
**05.09.79 Patentblatt 79/18**

(84) Benannte Vertragsstaaten:
**CH DE FR IT LU NL SE**

(71) Anmelder: **SIEMENS AKTIENGESELLSCHAFT**
**Berlin und München**
**Postfach 261**
**D-8000 München 22(DE)**

(72) Erfinder: **Strehl, Herbert, Dipl.-Ing.**
**Drozza-Weg 15**
**D-8000 München 70(DE)**

(54) **Digitales Nachrichtenübertragungssystem.**

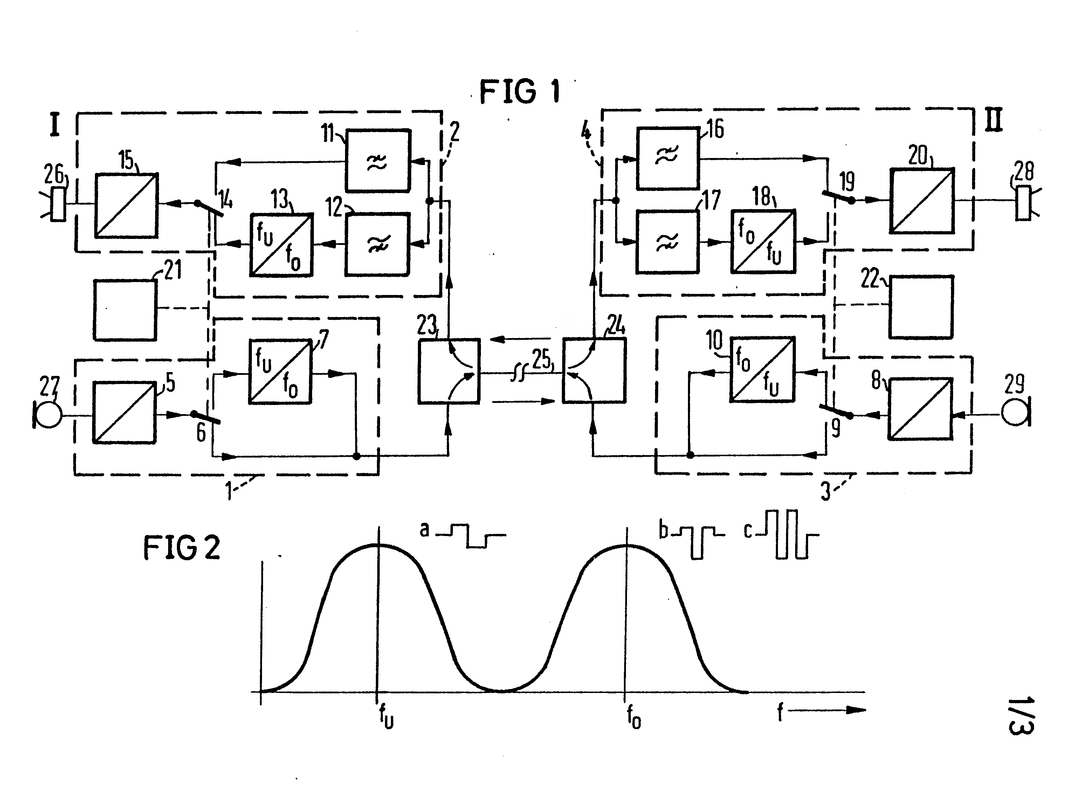

(57) Die Erfindung bezieht sich auf ein digitales Nachrichte-nübertragungssystem mit zwei durch eine Zweidrahtleitung (25) verbundenen Endstellen (I, II). Von diesen enthält jede eine Gabelschaltung (23,24), einen Sendeteil (1,3), einen Empfangsteil (2,4) und eine Rufeinrichtung (21,22). Erfindungs-gemäß sendet in der rufenden Endstelle der Sendeteil (1) Signale in einer ersten Frequenzlage aus und empfängt der Empfangsteil (2) Signale in einer zweiten Frequenzlage. In der gerufenen Endstelle verhält es sich umgekehrt. Mit dieser Anordnung läßt es sich vermeiden, daß beim Einsatz von digitalen Endgeräten beim Teilnehmer die mäßige Sperr-dämpfung der Gabelschaltung eine Störung des Empfangssi-gnals durch das eigene Sendesingal bewirkt (Fig. 1).

EP 0 003 848 A1

Croydon Printing Company Ltd.

./.

FIG 1

0003848

SIEMENS AKTIENGESELLSCHAFT    Unser Zeichen
Berlin und München           VPA 78 P 6 5 4 3 BRD

## 5 Digitales Nachrichtenübertragungssystem

Die Erfindung bezieht sich auf ein digitales Nachrichtenübertragungssystem mit zwei durch eine Zweidrahtleitung verbundenen Endstellen, die eine Gabelschaltung, einen Sendeteil, einen Empfangsteil und eine Rufeinrichtung enthalten.

In der analogen Technik werden zur Trennung von Hin- und Rückrichtung auf Zweidrahtleitungen Gabelschaltungen (Brückenschaltungen) verwendet, weil die mäßige von der jeweiligen Leitungsimpedanz abhängige Sperrdämpfung nur ein Mithören der eigenen Sprache verursacht. Beim Einsatz von digitalen Endgeräten beim Teilnehmer kann die mäßige Sperrdämpfung der Gabelschaltung eine Störung des Empfangssignals durch das eigene Sendesignal bewirken. Dies ist sowohl bei Sprachsignalcodes als auch bei Datengeräten der Fall.

Wke 1 Shy /

Dieser Schwierigkeit kann entweder durch Verbesserung der Gabelsperrdämpfung oder durch Verwendung von Getrenntlageverfahren begegnet werden. Ersteres wird nach der DE-AS 2 628 852 durch automatischen Abgleich der Nachbildung oder nach der DE-OS 2 543 130 durch Kompensation der eigenen Sendeimpulse im Empfangszweig bewirkt. Letzteres kann entweder nach der DE-PS 2 040 401 mit Zeitmultiplextechnik oder mit Frequenzmultiplextechnik realisiert werden.

Die Verfahren zur Verbesserung der Gabelsperrdämpfung haben den Nachteil, daß sich mit diesen eine Reichweite wesentlich größer als 4 km nicht erreichen läßt, weil dann selbst bei verbesserter Gabeldämpfung die Störung der schwachen Empfangssignale durch die eigenen Sendesignale zu groß wird. Hinzu kommt, daß beim Einsatz im Ortsnetz noch eine Reserve für das Nahnebensprechen vorhanden sein muß.

Auch bei einer nach dem Zeitmultiplexverfahren arbeitenden Anordnung läßt sich die Reichweite nicht ohne weiteres verbessern, weil die Berücksichtigung der Signallaufzeit mit zunehmender Entfernung eine stärkere Kompression der Bitfolgen verlangt, was zu höheren Übertragungsbitraten führt. Außerdem birgt eine Übertragungsbitrate von beispielsweise 256 kbit/s die Gefahr, mit den Störstrahlungsschutzbedingungen in Konflikt zu geraten, wenn das Übertragungssystem auf ungeschirmten Leitungen eingesetzt wird.

Außerdem treten bekanntlich in vielpaarigen Ortskabeln sowohl bei Zweidraht- als auch bei Vierdrahtbetrieb Nahnebensprechstörungen auf.

Aufgabe der Erfindung ist es, ein derartiges System mit hoher Sperrdämpfung bei relativ geringem Aufwand zu realisieren, das außerdem die Nahnebensprechstörungen eliminiert.

Ausgehend von einem System der einleitend geschilderten Art, wird diese Aufgabe erfindungsgemäß dadurch gelöst, daß in der rufenden Endstelle ein Sendeteil, der Signale in einer ersten Frequenzlage aussendet, und ein Empfangsteil vorgesehen sind, der Signale in einer zweiten Frequenzlage empfängt, und daß in der gerufenen Endstelle ein Sendeteil, der Signale in der zweiten Frequenzlage aussendet, und ein Empfangsteil vorgesehen sind, der Signale in der ersten Frequenzlage empfängt.

Durch das Zusammenwirken einer gewöhnlichen Gabelschaltung mit einem vereinfachten Frequenzmultiplexverfahren kann die Sperrdämpfung auf die erforderlichen Werte für eine größere Reichweite angehoben werden, ohne daß der Aufwand für die Schaltung das beim Teilnehmer vertretbare Ausmaß übersteigt.

Für die praktische Durchführung der Erfindung ist es vorteilhaft, wenn im Sendeteil ein Analog-Digital-Umsetzer, dessen Eingang als Eingang des Sendeteils dient, ein Sendeumschalter, dessen Eingang mit dem Ausgang des Analog-Digital-Umsetzers verbunden ist, und ein erster Frequenzumsetzer vorgesehen sind, dessen Eingang mit einem ersten Ausgang des Sendeumschalters verbunden ist, dessen Ausgang mit einem zweiten Ausgang des Sendeumschalters verbunden ist und dessen Ausgang als Ausgang des Sendeteils dient, und wenn im Empfangsteil ein Tiefpaß und ein Hochpaß, deren Eingänge als Eingang des Empfangsteils dienen, ein zweiter Frequenzumsetzer, dessen Eingang mit dem Ausgang des Hochpasses verbunden ist, ein Empfangsumschalter, dessen einer Eingang mit dem Ausgang des zweiten Frequenzumsetzers und dessen anderer Eingang mit dem Ausgang des Tiefpasses verbunden sind, und ein Digital-Analog-Umsetzer vorgesehen sind, dessen Eingang mit dem Ausgang des Empfangsumschalters verbunden ist und dessen Ausgang als Ausgang des Empfangsteils dient.

Vorteilhaft ist es auch, wenn anstelle der Gabel, des Tiefpasses und des Hochpasses eine Frequenzweiche vorgesehen ist.

Ein Verkehr zwischen verschiedenen Teilnehmern einer herkömmlichen Zweidrahtvermittlung wird möglich, wenn durch eine automatische Umschaltereinrichtung erreicht wird, daß beispielsweise der rufende Teilnehmer immer in der unteren Frequenzlage sendet und der gerufene Teilnehmer immer in der oberen Frequenzlage antwortet. Diese Umschalteeinrichtung kann beispielsweise durch das Rufsignal ausgelöst werden.

Dieses Verfahren ist dann vorteilhaft, wenn eine vorhandene Zweidrahtnebenstellenanlage auf Digitalbetrieb umgestellt werden soll, weil in der Zweidrahtvermittlung dann kaum Änderungen notwendig sind.

Bei den größeren Entfernungen in Ortsnetzen ist es zweckmäßig, die Übertragungsstrecke von Teilnehmer zu Teilnehmer in der Vermittlung zu unterteilen. Durch diese Unterteilung und eine Festlegung, daß alle Signale von der Vermittlung aus in der einen Frequenzlage und alle Signale zur Vermittlung hin in der anderen Frequenzlage übertragen werden, wird erreicht, daß das Nahnebensprechen keinen störenden Einfluß mehr hat. Dies gilt auch dann, wenn dieses Verfahren nicht auf Zwei- sondern auf Vierdrahtleitungen eingesetzt wird.

Vorteilhaft ist es dabei, wenn anstelle des Hochpasses und der Gabel eine Frequenzweiche vorgesehen ist.

Durch eine Unterscheidung von gehendem und kommendem Verkehr lassen sich in vorteilhafter Weise zentrale Umsetzer einführen.

Schließlich ist es noch von Vorteil, wenn als Frequenzumsetzer ein Codeumsetzer vorgesehen ist, da dann der Aufwand besonders niedrig ist.

Anhand von Ausführungsbeispielen wird die Erfindung nachstehend näher erläutert.

Fig. 1 zeigt ein erfindungsgemäßes System,
Fig. 2 zeigt die Frequenzlagen der Signale für beide Richtungen,
Fig. 3 zeigt Nahnebensprechstörungen bei Frequenzumsetzung mit automatischer Umschaltung der Frequenzlage beim Teilnehmer,
Fig. 4 zeigt eine Endstelle mit festgelegten Frequenzlagen für Hin- und Rückrichtung,
Fig. 5 zeigt eine Vierdrahtvermittlung mit Frequenzumsetzung beim Teilnehmer und in der Vermittlung und
Fig. 6 zeigt eine Zweidrahtvermittlung mit zentraler Frequenzumsetzung und Steuerung.

Fig. 1 zeigt ein erfindungsgemäßes Nachrichtenübertragungssystem mit einer momentan rufenden Endstelle I und einer momentan gerufenen Endstelle II.

Die Endstelle I enthält einen Sendeteil 1 und einen Empfangsteil 2. Der Sendeteil 1 enthält einen Analog-Digital-Umsetzer 5, einen Sendeumschalter 6 und einen Frequenzumsetzer 7. Der Empfangsteil 2 enthält einen Tiefpaß 11, einen Hochpaß 12, einen Frequenzumsetzer 13, einen Empfangsumschalter 14 und einen Digital-Analog-Umsetzer 15. Weiter sind eine Schaltersteuerung 21, ein Hörer 26, ein Mikrofon 27 und eine Gabelschaltung 23 vorgesehen. Anstelle des Tiefpasses 11 und des Hochpasses 12 kann auch eine Frequenzweiche verwendet werden.

In der Endstelle II ist der Sendeteil 3 wie der Sendeteil 1 und der Empfangsteil 4 wie der Empfangsteil 2 aufgebaut. Darüber hinaus sind ebenfalls eine Schaltersteuerung 22, ein Hörer 28, ein Mikrofon 29 und eine Gabelschaltung 24 vorgesehen. Die Übertragung erfolgt über eine Zweidrahtleitung 25.

Geht von der Endstelle I ein Ruf zur Endstelle II, so schalten die Schaltersteuerungen 21 und 22 die Sendeumschalter 6 und 9 und die Empfangsumschalter 14 und 19 in der dargestellten Weise.

Wird in das Mikrofon 27 gesprochen, so setzt der Analog-Digital-Umsetzer 5 das Analogsignal in ein Digitalsignal um, dessen Leistungsspektrum sein Schwerpunkt bei der Frequenz $f_u$ hat. Dieses Digitalsignal gelangt über den Umschalter 6, die Gabelschaltung 23, die Zweidrahtleitung 25, die Gabelschaltung 24, den Tiefpaß 16 und den Empfangsumschalter 19 zum Digital-Analog-Umsetzer 20, der das Digitalsignal in ein Analogsignal umsetzt, das am Hörer 28 zu hören ist. Wird jetzt in das Mikrofon 29 gesprochen, so wird dieses Analogsignal im Analog-Digital-Umsetzer 8 in ein Digitalsignal umgesetzt, das ebenfalls den Schwerpunkt seines Leistungsspektrums bei der Frequenz $f_u$ hat. Dieses Signal läuft über den Sendeumschalter 9 zum Frequenzumsetzer 10, der das Digitalsignal in ein Digitalsignal mit einem Schwerpunkt des Leistungsspektrums bei der Frequenz $f_o$ umsetzt. Dieses

0003848

Signal läuft über die Gabelschaltung 24, die Zweidrahtleitung 25, die Gabelschaltung 23, den Hochpaß 12 zum
Frequenzumsetzer 13, der das Digitalsignal wieder in
ein Spektrum mit seinem Schwerpunkt bei der Frequenz $f_u$
umsetzt. Von dort gelangt das Digitalsignal über den
Empfangsumschalter 14 und den Digital-Analog-Umsetzer 15
zum Hörer 26. Ist die Endstelle II die rufende Station,
so werden beide Sendeumschalter 6 und 9 und beide
Empfangsumschalter 14 und 19 umgelegt und das beschriebene Verfahren spielt sich in Gegenrichtung ab.

Da die Übertragung in beiden Richtungen in unterschiedlichen Frequenzlagen erfolgt, wird die durch die Gabelschaltungen 23 und 24 bereits vorhandene Sperrdämpfung
vergrößert.

Fig. 2 zeigt im Prinzip eine Trennung der Schwerpunktsfrequenz von Leistungsspektren, wie sie durch Umcodierung der Impulse a in die Impulse b oder c bewirkt wird.

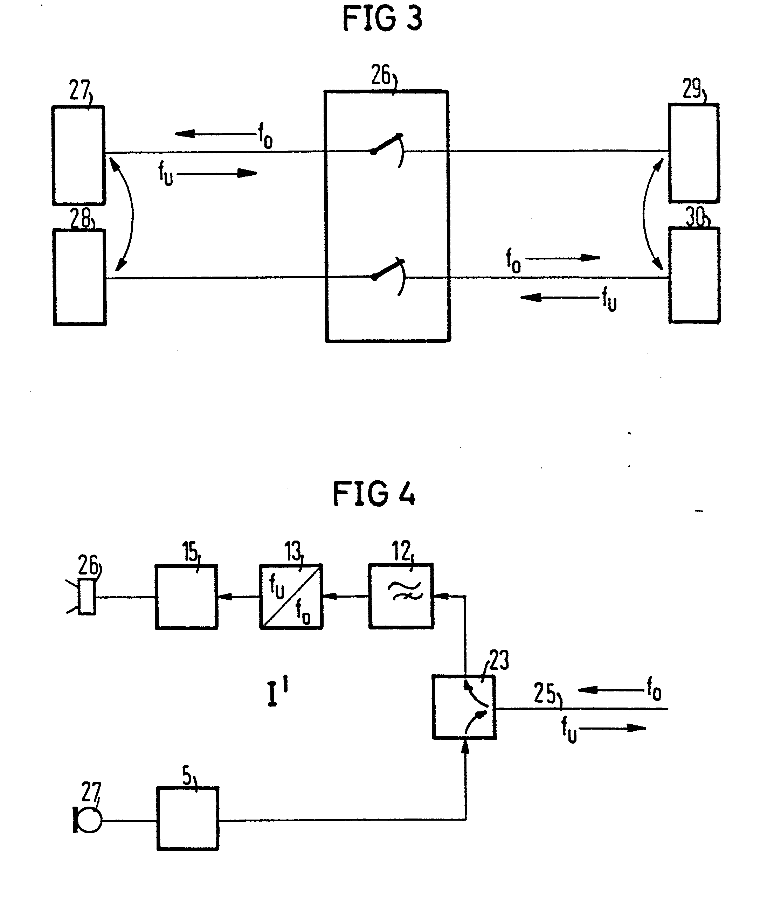

Fig. 3 zeigt ein Vermittlungssystem mit einer Zweidrahtvermittlung 26 und vier Endstellen 27 bis 30.

Die Endstellen 27 und 30 sind rufende Endstellen und die
Endstellen 28 und 29 sind gerufene. Die Übertragung von
der Endstelle 27 zur Endstelle 29 und von der Endstelle
30 zur Endstelle 28 erfolgt mit einem Leistungsspektrum
mit dem Maximum bei der Frequenz $f_u$. Die Übertragung in
Gegenrichtung erfolgt jeweils mit Signalen eines Leistungsspektrums, das sein Maximum bei der Frequenz $f_o$
hat. Ein Nachteil dieses Verfahrens ist es, daß sich die
Anschlußleitungslängen der beiden Endstellen für die
Übertragung addieren und daß in ungünstigen Fällen Nahnebensprechstörungen möglich sind, die zwischen den Endstellen 27 und 28 bzw. 29 und 30 auftreten können.

Fig. 4 zeigt eine Endstelle I', bei der der Sendeumschalter 6 und der Empfangsumschalter 14 fest eingestellt sind. In der oberen Frequenzlage ist eine Übertragung von der Vermittlung zur Endstelle und in der unteren Frequenzlage von der Endstelle zur Vermittlung oder umgekehrt möglich. Es sind aber nun Frequenzumsetzer in der Vermittlung notwendig. Anstelle der Gabel 23 und des Hochpasses 12 kann auch eine Frequenzweiche verwendet werden.

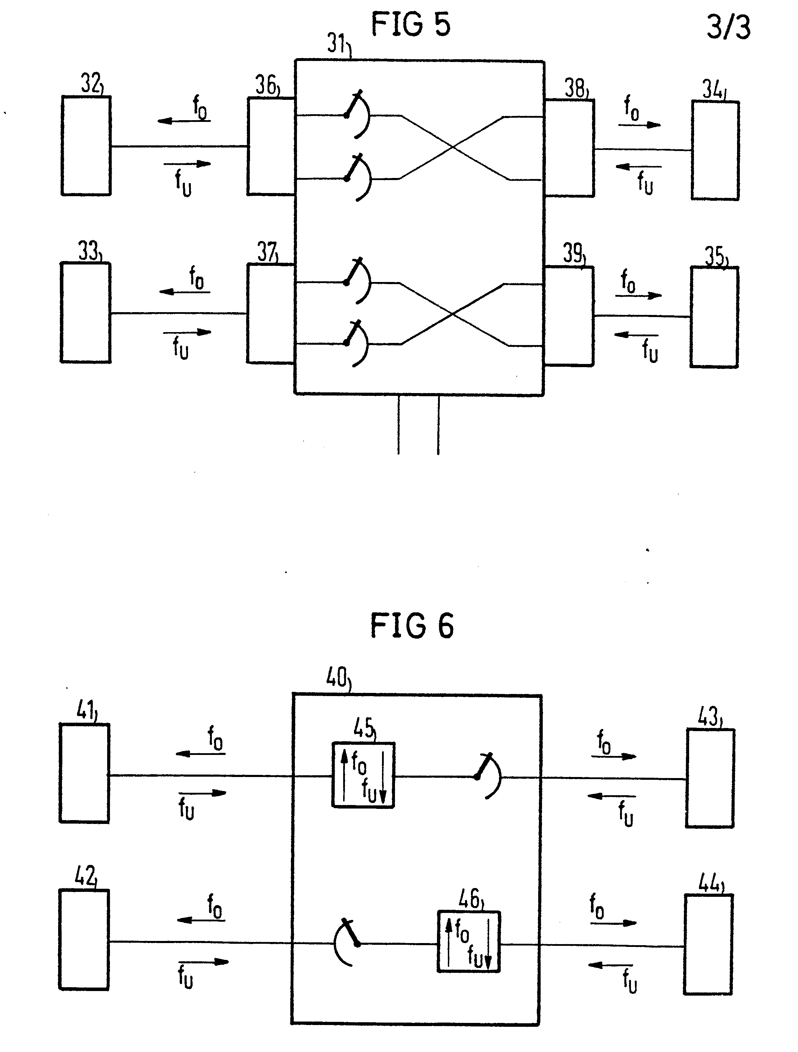

Fig. 5 zeigt ein derartiges System mit einer Vierdrahtvermittlung 31, mit Endstellen 32 bis 35 und Frequenzumsetzer 36 bis 39.

Mit den Frequenzumsetzern 36 bis 39 werden die Frequenzlagen vertauscht.

Fig. 6 zeigt ein System mit einer Zweidrahtvermittlung 40 und Teilnehmerstationen 41 bis 44, bei dem die Frequenzumsetzer 45 und 46 zentral angeordnet sind und eine Unterscheidung zwischen kommendem und gehendem Verkehr erfolgt.


10 Patentansprüche
 6 Figuren

0003848

<u>Patentansprüche</u>

1. Digitales Nachrichtenübertragungssystem, das digitale Endstellen, eine Gabelschaltung mit Zweidrahtleitung oder eine Vierdrahtleitung, einen Sendeteil, einen Empfangsteil und eine Rufeinrichtung enthält, d a - d u r c h   g e k e n n z e i c h n e t , daß in der rufenden Endstelle (I) ein Sendeteil (1), der Signale in einer ersten Frequenzlage aussendet, und ein Empfangsteil (2) vorgesehen sind, der Signale in einer zweiten Frequenzlage empfängt, und daß in der gerufenen Endstelle (II) ein Sendeteil (3), der Signale der zweiten Frequenzlage aussendet, und ein Empfangsteil (4) vorgesehen sind, der Signale in der ersten Frequenzlage empfängt.

2. System nach Anspruch 1, d a d u r c h   g e - k e n n z e i c h n e t , daß im Sendeteil (1, 3) ein Analog-Digital-Umsetzer (5, 8) oder Datensender, dessen Eingang als Eingang des Sendteils (1, 3) dient, ein Sendeumschalter (6, 9), dessen Eingang mit dem Ausgang des Analog-Digital-Umsetzers (5, 8) verbunden ist, und ein erster Frequenzumsetzer (7, 10) vorgesehen sind, dessen Eingang mit einem ersten Ausgang des Sendeumschalters (6, 9) verbunden ist, dessen Ausgang mit einem zweiten Ausgang des Sendeumschalters (6, 9) verbunden ist und dessen Ausgang als Ausgang des Sendeteils (1, 3) dient.

3. System nach Anspruch 1, d a d u r c h   g e - k e n n z e i c h n e t , daß im Empfangsteil (2, 4) ein Tiefpaß (11, 16) und ein Hochpaß (12, 17), deren Eingänge als Eingang des Empfangsteils (2, 4) dienen, ein zweiter Frequenzumsetzer (13, 18), dessen Eingang mit dem Ausgang des Hochpasses (12, 17) verbunden ist, ein Empfangsumschalter (14, 19), dessen einer Eingang mit dem Ausgang des zweiten Frequenzumsetzers (13, 18) und dessen anderer Eingang mit dem Ausgang des Tiefpasses (11, 16) verbunden sind, und ein Digital-Analog-Umsetzer (15, 20) oder Datenempfänger vorgesehen sind, dessen Eingang mit dem Ausgang des Empfangsumschalters (14, 19) verbunden ist und dessen Ausgang als Ausgang des Empfangsteils (2, 4) dient.

4. System nach Anspruch 3, d a d u r c h  g e - k e n n z e i c h n e t , daß anstelle des Tiefpasses (11, 16) und des Hochpasses (12, 17) eine Frequenzweiche vorgesehen ist.

5. System nach einem der vorhergehenden Ansprüche, d a - d u r c h  g e k e n n z e i c h n e t , daß in jeder Endstelle (I, II) eine auf einen Ruf ansprechende Schaltersteuerung (21, 22) für den Sendeumschalter (6, 9) und für den Empfangsumschalter (14, 19) vorgesehen ist.

6. System nach einem der vorhergehenden Ansprüche, d a - d u r c h  g e k e n n z e i c h n e t , daß eine Endstelle (I, II) eine Vermittlung ist.

7. System nach Anspruch 6, d a d u r c h  g e - k e n n z e i c h n e t , daß in der Vermittlung (31) alle Sendeumschalter und alle Empfangsumschalter gleich eingestellt sind.

8. System nach Anspruch 7, d a d u r c h  g e - k e n n z e i c h n e t , daß anstelle des Hochpasses (12) und der Gabel (23) eine Frequenzweiche vorgesehen ist.

9. System nach Anspruch 7 oder 8, d a d u r c h  g e - k e n n z e i c h n e t , daß zentrale Umsetzer (45, 46) vorgesehen sind.

10. System nach Anspruch 1 oder 2, **d a d u r c h
g e k e n n z e i c h n e t** , daß als Frequenzmsetzer (7, 10, 13, 18) ein Codeumsetzer vorgesehen ist.

FIG 1

FIG 2

FIG 3

FIG 4

FIG 5

3/3

0003848

FIG 6

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 655 915 (LIBERMAN)<br>* Spalte 2, Zeilen 1-31 *<br><br>-- | 1-3,5 |
| | ONDE ELECTRIQUE, Vol. 45, Nr. 458,<br>Mai 1965,<br>Paris,<br>M. MANIERE: "La transmission de données, méthodes de modulation",<br>Seiten 583-588<br>* Figur 5 *<br><br>-- | 1-3 |
| | US - A - 3 937 882 (BINGHAM)<br>* Spalte 3, Zeilen 3-15,49-68 *<br><br>-- | 1-3 |
| | US - A - 3 715 496 (G.D. JONES)<br>* Figuren 1-3 *<br><br>-- | 1,3,10 |
| | US - A - 3 846 582 (CONDON)<br>* Spalte 2, Zeilen 18-26 *<br><br>-- | 1,2 |
| | DE - A - 2 141 198 (SIEMENS)<br>* Seite 5, letzter Absatz; Seite 6, Absatz 1 *<br><br>-- | 1-3 |
| | NACHRICHTENTECHNISCHE ZEITSCHRIFT,<br>Vol. 29, Nr. 6, Juni 1976,<br>Berlin,<br>./. | 1,10 |

**KLASSIFIKATION DER ANMELDUNG (Int.Cl.²)**

H 04 L 5/14

**RECHERCHIERTE SACHGEBIETE (Int. Cl.²)**

H 04 L 5/14
5/06
H 04 B 3/38
1/50
1/52
H 04 Q 5/00
H 04 M 11/06

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-05-1979 | GEISLER |

EPA form 1503.1 06.78

0003848

| | Europäisches Patentamt | **EUROPÄISCHER RECHERCHENBERICHT** | |
|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | T. IRMER: "Digitale Uebertragungstechnik für das Datenfernnetz in der Bundesrepublik Deutschland", Seiten 432-435<br><br>* Seite 433, rechte Spalte, 5 letzte Zeilen; Seite 434, linke Spalte, Absatz 1; Figur 4 *<br><br>---- | |

**KLASSIFIKATION DER ANMELDUNG (Int.Cl.²)**

**RECHERCHIERTE SACHGEBIETE (Int. Cl.²)**

EPA Form 1503.2   06.78

-2-